# EUROPEAN PATENT APPLICATION

(11) **EP 3 975 182 A1**
(43) Date of publication of application: **30.03.2022**
(21) Application number: 21197149.4
(22) Date of filing: 16.09.2021
(51) Int. Cl.: G11B 27/031, H04N 5/76

(54) **VIDEO EDITING EQUIPMENT**

(30) Priority: 28.09.2020 JP 2020162048
(71) Applicant: MAZDA MOTOR CORPORATION, Hiroshima 730-8670 (JP)
(72) Inventor: Ito, Seiichi, Hiroshima, 730-8670 (JP); Okamura, Masashi, Hiroshima, 730-8670 (JP); Maeda, Takashi, Hiroshima, 730-8670 (JP); Furukawa, Yuji, Hiroshima, 730-8670 (JP)
(74) Representative: Behr, Wolfgang

(57) **Abstract**

[Task] To appropriately edit a video captured in a moving body on the basis of a first degree of action indicative of an influence of an element other than an interaction with a person on an experience and a second degree of action indicative of an influence of the interaction with the person on the experience.

[Solution] A management device 30 as video editing equipment acquires videos captured by an in-vehicle camera 11a and an outside camera 11b during movement of a vehicle 1, acquires driving state information by a driver and emotional state-related information that is related to an emotional state of the driver or a passenger during the movement of the vehicle 1, determines the first degree of action indicative of the influence of the element other than the interaction with the person on an experience of the driver or the passenger and the second degree of action indicative of the influence of the interaction with the person on the experience of the driver or the passenger on the basis of the driving state information and the emotional state-related information, identifies plural highlight portions in the videos on the basis of the first degree of action and the second degree of action, and edits the videos on the basis of the plural highlight portions.

## Description

### [Technical Field]

The present invention relates to video editing equipment that edits a video captured in a moving body.

### [Background Art]

Conventionally, a technique of editing a video that is captured in a moving body such as a vehicle has been known. For example, JP 2011-217116 A discloses a technique of editing a video of outside world that is captured during travel of the vehicle on the basis of a level of danger detected during the travel. In addition, as a video editing method, a technique of editing a video on the basis of a user's emotional state has been known. For example, JP 2018-042240 Adiscloses a technique of extracting an image frame group in a video content on the basis of a change in the emotional state at the time when the user watches this video content, and generating a new video content.

### [Summary of the Invention]

### [Problem to be solved by the invention]

By the way, the present inventors found that there were two types of patterns in a way the user enjoys a certain "product". The first pattern is a pattern in which the user is repeatedly self-trained to acquire knowledge, skills, and the like of the "product", thereby receives action (that is, a stimulus) from the "product", and achieves personal growth (hereinafter referred to as an "α cycle"). The second pattern is a pattern in which the user is involved with a "person" through the "product", has an interaction with the "person" via communication, and thereby enjoys a group activity (hereinafter referred to as a "β cycle"). Here, in the present specification, the "product" is a concept that includes existing objects (for example, a camera, a vehicle, a building, scenery, and the like) and non-existing objects (for example, a sport, a movie, and the like), and is further a concept that includes existence of objects other than the "person".

The α cycle is such a cycle that the user enjoys individually while the personal growth of the user is significantly promoted. Accordingly, even when there is involvement with another "person", the user's activity in the α cycle tends to be an activity in a small group of persons with similar personal interests (a small group of homogenous users). Meanwhile, the β cycle is a cycle that exerts interaction with many other users although not significantly promoting the personal growth of the user. Accordingly, the user's activity in the β cycle is not limited to that in the small group of homogenous users but is likely to be extended to an activity in a large group in which various types of users are mixed.

When the user who has only enjoyed the activity in one of the α cycle and the β cycle tries the other activity in addition to such an activity, the user can gain new findings and pleasure. For this reason, the present inventors have come to such an idea that, by connecting and urging circulation of the α cycle and the β cycle, the user's pleasure related to a certain "product" is further enriched, which further enriches quality of life. That is, the enhanced pleasure further enriches the life.

In particular, the present inventors considered that the video captured in the moving body could preferably be edited from perspectives of the α cycle and the β cycle as described above. In detail, the present inventors considered that, when the video was edited in a manner to give the user action from the "product" and action from the "person", which were inherent to a drive experience by the moving body, (respectively corresponding to a first degree of action indicative of an influence of an element other than the interaction with the person on the experience and a second degree of action indicative of an influence of the interaction with the person on the experience), it would be possible to promote breadth of experiences through the moving body.

The present invention has been made to solve the above problem and therefore has a purpose of providing a technical solution that provides automated support to the user.

### [Means for solving the Problem]

In order to achieve the above purpose, the present invention is video editing equipment configured to: acquire videos captured by plural cameras, each of which captures a video of outside or inside of a moving body during movement of the moving body; acquire driving state information indicative of a driving state of the moving body by a driver and emotional state-related information related to an emotional state of the driver and/or a passenger of the moving body during the movement of the moving body; determine a first degree of action indicative of an influence of an element other than an interaction with a person on an experience of the driver and/or the passenger and a second degree of action indicative of an influence of the interaction with the person on the experience of the driver and/or the passenger on the basis of the acquired driving state information and the acquired emotional state-related information; identify plural highlight portions in the videos on the basis of the determined first degree of action and the determined second degree of action; and edit the videos on the basis of the plural identified highlight portions.

According to the present invention that is configured as described above, it is possible to edit the videos that are captured in the moving body in consideration of: the first degree of action indicative of the influence of the element other than the interaction with the person on the experience of the driver or the passenger during the movement of the moving body (corresponding to action from a "product" (an α cycle)); and the second degree of action indicative of the influence of the interaction with the person on the experience of the driver or the passenger during the movement of the moving body (corresponding to action from the "person" (a β cycle)). When watching the thus-edited video, a user (the driver or the passenger) can look back both of the action from the "product" and the action from the "person", which are inherent to a drive experience by the moving body. Therefore, according to the present invention, it is possible to promote breadth of the experiences through the moving body by technical support means. The present invention therefore provides video editing equipment capable of appropriately editing a video captured in a moving body on the basis of a first degree of action indicative of an influence of an element other than an interaction with a person on an experience and a second degree of action indicative of an influence of the interaction with the person on the experience.

In the present invention, it is preferably configured to identify, as the plural highlight portions, a portion in which the first degree of action is relatively high and a portion in which the second degree of action is relatively high in the videos, and generates a highlight video that includes all of the plural highlight portions or one or more of the highlight portions.

According to the present invention that is configured as described above, it is possible to appropriately generate the highlight video (an overview video) including the portion in which the first degree of action is relatively high and the portion in which the second degree of action is relatively high. Therefore, by watching this highlight video, the user can reliably look back both of the action from the "product" and the action from the "person", which are inherent to the drive experience.

In the present invention, it is preferably configured to, as editing of the videos, add a chapter to a position corresponding to beginning of each of the plural highlight portions in the videos, so as to segment the videos.

According to the present invention that is configured as described above, the user can immediately watch the highlight portion in the video by selecting the chapter that is added to the video.

In the present invention, it is preferably configured to, when the driving state information indicates that the driver is in a preferred driving state, determine that the first degree of action is relatively high, and identify, as the highlight portion, the video that is captured by the camera capturing the video of the outside of the moving body at this time.

According to the present invention that is configured as described above, it is possible to appropriately identify, as the highlight portion, the portion in which the first degree of action is relatively high in the video on the basis of the driving state of the driver.

In the present invention, it is preferably configured to, when the emotional state-related information indicates that the emotion of the driver and/or the passenger is activated by a stimulus from the outside of the moving body, determine that the first degree of action is relatively high, and identify, as the highlight portion, the video that is captured by the camera capturing the video of the outside of the moving body at this time.

According to the present invention that is configured as described above, it is possible to appropriately identify, as the highlight portion, the portion in which the first degree of action is relatively high in the video on the basis of the emotion of the driver or the passenger activated by the stimulus from the outside of the moving body (scenery or the like).

In the present invention, it is preferably configured to, when the emotional state-related information indicates that the emotion of the driver and/or the passenger is activated by in-vehicle communication in the moving body, determine that the second degree of action is relatively high, and identify, as the highlight portion, the video that is captured by the camera capturing the video of the inside of the moving body at this time.

According to the present invention that is configured as described above, it is possible to appropriately identify, as the highlight portion, the portion in which the second degree of action is relatively high in the video on the basis of the emotion of the driver or the passenger activated by the in-vehicle communication (conversation or the like) in the moving body.

In the present invention, it is preferably configured to include plural editing modes, extract one or more highlight portions from the plural highlight portions according to the editing mode that is selected by a user from these plural editing modes, and generate a highlight video that includes these extracted highlight portions.

According to the present invention that is configured as described above, it is possible to generate the highlight video that is edited according to the user's taste.

In the present invention, it is preferably configured to, before causing the user to select the editing mode, generate a highlight video that includes all of the plural highlight portions, so as to provide the user with the highlight video that includes all of the plural highlight portions.

According to the present invention that is configured as described above, since the user can check all of the highlight portions first, the user can accurately select the editing mode that corresponds to the taste.

The present invention preferably includes an editing mode to extract a highlight portion that corresponds to the video captured by the camera capturing the video of the outside of the moving body from the plural highlight portions, so as to generate the highlight video when the driver is in the preferred driving state.

According to the present invention that is configured as described above, it is possible to appropriately generate the highlight video, which includes the video of the outside of the moving body captured when the driver is in the preferred driving state, by editing.

The present invention preferably includes an editing mode to extract the highlight portion that corresponds to the video captured by the camera capturing the video of the outside of the moving body from the plural highlight portions, so as to generate the highlight video when the emotion of the driver and/or the passenger is activated by the stimulus from the outside of the moving body.

According to the present invention that is configured as described above, it is possible to appropriately generate the highlight video, which includes the video of the outside of the moving body captured when the emotion of the driver or the passenger is activated by the stimulus from the outside of the moving body (the scenery or the like), by editing.

The present invention preferably includes an editing mode to extract the highlight portion that corresponds to the video captured by the camera capturing the video of the inside of the moving body from the plural highlight portions, so as to generate the highlight video when the emotion of the driver and/or the passenger is activated by the in-vehicle communication in the moving body.

According to the present invention that is configured as described above, it is possible to appropriately generate the highlight video, which includes the video of the inside of the moving body captured when the emotion of the driver or the passenger is activated by the in-vehicle communication (the conversation or the like) in the moving body, by editing.

In the present invention, preferably, the video editing equipment is configured to, when a preferred driving state of the driver continues for two seconds or longer, identify a video, which is captured by an outside camera, preferably capturing a video of the area in front of the moving body at this time, as a highlight portion.

In the present invention, preferably, the video editing equipment is configured to generate a video by aligning and connecting plural highlight portions in a descending order of a start time.

In the present invention, preferably, the video editing equipment is configured to, in the case start times of highlight portions are the same, generate a video by sequentially aligning the highlight portions.

In the present invention, preferably, the video editing equipment is configured to align highlight portions with the same start time in an order of an area in front of the moving body, an area on the right side of the moving body, an area on the left side of the moving body, an area behind the moving body, and an inside of the moving body.

In the present invention, preferably, the video editing equipment is configured to identify, as a highlight portion, a video in a period added with five seconds before and after a period in which an identification condition of the highlight portion is satisfied.

In the present invention, preferably, the video editing equipment is configured to, in the case where periods, in each of which an identification condition is satisfied, overlap each other and a camera to be applied for the highlight portion is the same at the time when each of the identification conditions is satisfied, collectively apply a single highlight portion.

According to another aspect of the present invention a video editing system is provided including a video editing equipment according to any of claims 1 to 14 and a moving body.

In the present invention, preferably, the moving body is a vehicle.

In the present invention, preferably, the moving body is a car, a bus, a motorcycle, a scooter, a watercraft, or an aircraft.

### [Advantage of the invention]

According to the video editing equipment of the present invention, it is possible to promote breadth of the experiences through the moving body by editing the videos captured in the moving body on the basis of the first degree of action indicative of the influence of the element other than the interaction with the person on the experience and the second degree of action indicative of the influence of the interaction with the person on the experience.

### [Brief Description of the Drawings]

[Fig. 1] Fig. 1 is a configuration diagram of a video editing system according to an embodiment of the present invention.
[Fig. 2] Fig. 2 is an explanatory chart of a method for identifying highlight portions by video editing processing according to the embodiment of the present invention.
[Fig. 3] Fig. 3 is a schematic configuration view illustrating an example of each of first to fourth editing mode videos according to the embodiment of the present invention.
[Fig. 4] Fig. 4 is a schematic configuration chart illustrating an example of a fifth editing mode video according to the embodiment of the present invention.
[Fig. 5] Fig. 5 illustrates a processing flow of the video editing processing according to the embodiment of the present invention.

### [Modes for Carrying Out the Invention]

A description will hereinafter be made on video editing equipment according to an embodiment of the present invention with reference to the accompanying drawings.

### [System Configuration]

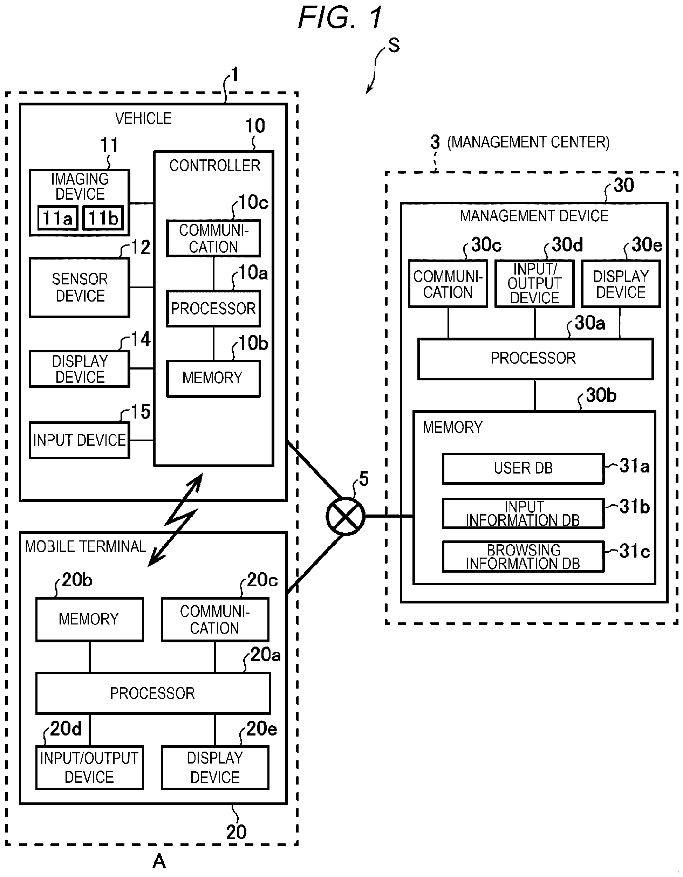

A description will firstly be made on a schematic configuration of a video editing system, to which the video editing equipment according to the embodiment of the present invention is applied, with reference to Fig. 1. Fig. 1 is a configuration diagram of the video editing system. A video editing system S in this embodiment is a system that edits a video captured in a vehicle 1 as a moving body.

As illustrated in Fig. 1, the video editing system S in this embodiment includes: a controller 10 in the vehicle 1 owned by a user A; a mobile terminal 20 owned by the user A; and a management device (a server) 30 in a management center 3, and these are configured to be wirelessly communicable. The controller 10, the mobile terminal 20, and the management device 30 are wirelessly communicable via a communication line (an Internet line) 5. The controller 10 and the mobile terminal 20 are communicable by a near-field wireless communication technology (for example, Bluetooth^{®}). In the video editing system S, vehicles 1B and mobile terminals 20B owned by plural other users B (for example, B1, B2, B3) are also connected in a wirelessly communicable manner to the management device 30. A description will hereinafter be made on the user A as a representative example of the plural users. However, the other users B similarly fit this description.

First, the controller 10 in the vehicle 1 is a computer device including a processor 10a, memory 10b, a communication circuit 10c, and the like, and is configured to execute processing when the processor 10a runs various programs stored in the memory 10b. The controller 10 is connected to an imaging device 11, a sensor device 12, a display device 14, and an input device 15 that are mounted on the vehicle 1. The processor 10a stores image data received from the imaging device 11, measurement data received from the sensor device 12, and input data received from the input device 15 in the memory 10b. In addition, the processor 10a repeatedly sends the image data, the measurement data, the input data, and processing data of these types of data to the management device 30 via the communication circuit 10c. Furthermore, the processor 10a is programmed to execute specified processing on the basis of a control signal received from the management device 30.

The imaging device 11 is a video camera and includes: an in-vehicle camera 11a that captures a video of a driver (the user A) and a passenger; and an outside camera 11b that captures a video of outside of the vehicle 1. The outside camera 11b includes plural video cameras to capture videos of front, rear, right, and left areas of the vehicle 1.

The sensor device 12 includes: a vehicle sensor that measures a vehicle state; and a biological sensor that acquires biological information of an occupant. The vehicle sensors include a positioning device for measuring a current position (positional information) of the vehicle 1 on Earth (for example, the Global Positioning System (GPS) and a gyroscope sensor are used), a vehicle speed sensor, an acceleration sensor, a steering angle sensor, a yaw rate sensor, another type of a sensor, and the like.

In this embodiment, based on output of the acceleration sensor in the sensor device 12, the controller 10 determines a driving state of the vehicle 1 by the driver, in particular, whether the driver is in a preferred driving state (hereinafter referred to as a "sleek driving state"). The sleek driving state is preferably a sleek driving state as defined in US2014/018974A1, in particular as defined in par. [0139]-[0179] of US2014/018974A1. More specifically, in the case where a change amount of acceleration of the vehicle 1 is relatively large (during a start, during a stop, during initiation of turning, during termination of turning, or the like), where the change amount of the acceleration is equal to or larger than a specified value, and where jerk (a differential value of the acceleration) is smaller than a specified value, the controller 10 determines that the driving state by the driver is the sleek driving state. In this driving state, a driving operation is performed at an appropriate speed, and each of a magnitude and a speed of sway of the occupant's body falls within a specified range. Meanwhile, in the case where the change amount of the acceleration of the vehicle 1 is relatively small (in the case where the vehicle 1 is accelerated, decelerated, or turned at the substantially constant acceleration), where the change amount of the acceleration of the vehicle 1 is smaller than the specified value, and an absolute value of the acceleration is equal to or larger than the specified value, the controller 10 determines that the driving state by the driver is the sleek driving state. In this driving state, the driving operation is performed all at once with an optimum operation amount, and such an operation state is maintained. As a result, the occupant's body is maintained stably. However, the component that makes such a determination on the driving state is not limited to the controller 10. The management device 30 and/or the mobile terminal 20 may partially or entirely make the determination on the driving state.

The biological sensors in the sensor device 12 include: an in-vehicle microphone that picks voices of the driver and the passenger in the vehicle; a heart rate measurement device that measures heart rate variability of the driver; and the like. The controller 10 can use the in-vehicle camera 11a as the biological sensor. For example, the controller 10 can acquire facial expressions, sightline directions, blinks, and the like of the driver and the passenger from the image data captured by the in-vehicle camera 11a.

In this embodiment, the controller 10 acquires, as biological data, behavior of upper bodies including pupil diameters, eye movement, positions and directions of heads and shoulders of the driver and the passenger, the facial expressions, and the heart rate variability measured by the heart rate measurement device, and such data is acquired by analyzing the image data of the in-vehicle camera 11a. Then, based on such biological data, the controller 10 analyzes psychological states (more specifically, degrees of tension) of the driver and the passenger, and determines whether the driver and the passenger are in a mentally favorable active state. In addition, the controller 10 analyzes the voices of the driver and the passenger, which are picked by the in-vehicle microphone, by using a known algorithm such as "MIMOSYS^{®}" and acquires emotional states (more specifically, degrees of mental activity) of the driver and the passenger. In particular, based on both of the degrees of mental activity, which are acquired by analyzing the voices, and the psychological states, which are acquired by analyzing the above biological data, the controller 10 determines the emotional states of the driver and the passenger. For example, while scoring the degree of mental activity by the voice, the controller 10 adds a specified score to the score of the degree of mental activity when determining that the psychological state by the biological data is the favorable active state. In this way, the controller 10 scores the emotional states of the driver and the passenger. Then, in the case where the thus-acquired scores are equal to or higher than a specified value, the controller 10 determines that the driver and the passenger are in the active state. However, the component that makes such a determination on the emotional state is not limited to only the controller 10. The management device 30 and/or the mobile terminal 20 may partially or entirely make the determination on the emotional state.

The display device 14 is a liquid-crystal display, for example, and can show a map, various types of traffic information, and the like. Here, the mobile terminal 20 may be used as the display device by connecting the mobile terminal 20 to the controller 10 in a wireless or wired fashion.

The input device 15 is an input device including a touch-type input screen, a switch, a button, or the like, and the driver can input various types of information by using the input device 15. The display device 14 may be used as the touch-type input screen. For example, when encountering scenery or a sightseeing spot that the driver likes during driving, the driver can input such a fact by the input device 15. In this case, an operation button used to input the fact that the driver likes the scenery or the like (hereinafter referred to as a "like button") may be provided at a position, where the driver can operate the operation button, in a cabin (in one example, provided to a steering device), or the like button may be shown on a screen of the display device 14 that is configured to be of a touch input type.

The controller 10 stores the image data of the imaging device 11, the measurement data of the sensor device 12, the input data of the input device 15, and the processing data in the memory 10b, and sends these types of data with a vehicle identification number, which is used to identify the vehicle 1, to the management device 30 as needed. The controller 10 sends the positional information, which indicates the current position of the vehicle 1, and IG on/off information to the management device 30. The IG on/off information indicates whether an IG (more specifically, an IG signal) of the vehicle 1 is on or off. In particular, the controller 10 sends, to the management device 30, the image data corresponding to the video captured by each of the in-vehicle camera 11a and the plural outside cameras 11b, information on the sightline direction of the passenger (passenger sightline information), information on the driving state by the driver, that is, information on whether the driver is in the sleek driving state (driving state information), information on emotions of the driver and the passenger, volume (dB) of conversation among the occupants picked by the in-vehicle microphone, and operation information of the like button.

The passenger sightline information is acquired by analyzing the image data of the in-vehicle camera 11a, and is information on a direction in which the sightline direction of the passenger is oriented, more specifically, any of an in-vehicle direction, a vehicle front direction, a vehicle rear direction, a vehicle right direction, and a vehicle left direction. The conversation volume (dB) is acquired by analyzing the voices picked by the in-vehicle microphone. In the case where the conversation volume sent from the controller 10 is equal to or larger than a specified value (for example, 60 dB), the management device 30 determines that the volume of the conversation among the occupants is "large". In another example, the controller 10 may determine whether the conversation volume is "large", and may send the determination result as the conversation volume to the management device 30. The operation information of the like button is information on whether the like button is on.

Here, each of the passenger sightline information, the conversation volume, and the operation information of the like button is information that indirectly indicates the emotion of the driver and/or the passenger. Information that is acquired by adding emotional information directly indicating the emotions of the driver and the passenger to these types of the information corresponds to the "emotional state-related information" in the present invention.

By the way, when the user A uses the video editing system S via the vehicle 1, the controller 10 may authenticate the user. For example, the controller 10 may use the image data, which is captured by the camera 11a, for user authentication (image authentication). Alternatively, for the user authentication, the controller 10 may use linkage of the mobile terminal 20 as registered equipment to the controller 10 via a near-field wireless communication line. In this case, the mobile terminal 20 is registered in the controller 10 in advance. In this user authentication, it is determined by the above linkage that the legitimate user A is in the vehicle 1.

Next, the mobile terminal 20 is a mobile-type computer device that includes a processor 20a, memory 20b, a communication circuit 20c, an input/output device 20d, a display device 20e, and the like. The mobile terminal 20 is configured to execute various types of processing when the processor 20a runs various programs stored in the memory 20b. In addition, the processor 20a exchanges various types of data with the management device 30 and the controller 10 via the communication circuit 20c.

The mobile terminal 20 acquires a current position by a positioning program on the basis of communication with a near-by communication station or on the basis of satellite positioning using the GPS. The mobile terminal 20 repeatedly sends a position signal indicative of the acquired current position, a mobile terminal identification number used to identify the mobile terminal 20, and another type of data to the management device 30.

The user A can access a website by using a browser program (a browser application) in the mobile terminal 20. For example, with the mobile terminal 20, the user A can browse various types of the information by accessing a database that is provided by the management device 30.

In addition, by using a specified program (application) in the mobile terminal 20, the user A can cause the display device 20e to show the various types of the data received from the management device 30, and can send specified data, which is input via the input/output device 20d, to the management device 30. More specifically, the display device 20e of the mobile terminal 20 shows the video that is edited by the management device 30. In this case, the user A selects a video editing mode by using the input/output device 20d of the mobile terminal 20. Then, the management device 30 edits the video in the thus-selected edition mode, sends the edited video to the mobile terminal 20, and causes the display device 20e to show the edited video.

Furthermore, the user A can set a travel route, on which the vehicle 1 travels, by using the mobile terminal 20. More specifically, the user A inputs a departure date and time, a total trip time, a departure point, an end point (home or an accommodation such as an inn), and the like by using the input/output device 20d, and the mobile terminal 20 sends the thus-input information to the management device 30. Then, based on the input information, the management device 30 sets the travel route to be suggested to the user A. The mobile terminal 20 and/or the controller 10 in the vehicle 1 shows the thus-set travel route. By the way, when the IG of the vehicle 1 is turned on in a state where the travel route is set, the controller 10 in the vehicle 1 sets a specified mode (hereinafter referred to as a "trip mode") to be on. When the vehicle 1 arrives at the end point of the travel route and the IG of the vehicle 1 is turned off, the controller 10 sets the trip mode to be off. The controller 10 in the vehicle 1 sends trip mode information indicative of on/off of such a trip mode to the management device 30.

The mobile terminal 20 can automatically be linked with the controller 10 by using the near-field wireless communication technology. In the case where the mobile terminal 20 is communications equipment that is registered in advance, the controller 10 authenticates the mobile terminal 20 and automatically establishes the communication line. At the time, the controller 10 can receive the mobile terminal identification number from the mobile terminal 20, and can add the mobile terminal identification number to the data to be sent to the management device 30.

Next, the management device 30 is a computer device (the server) including a processor 30a, memory 30b, a communication circuit 30c, an input/output device 30d, a display device 30e, and the like, and is configured to execute various types of processing when the processor 30a runs programs stored in the memory 30b. The memory 30b stores various types of the databases in addition to the programs. The management device 30 corresponds to the "video editing equipment" in the present invention and executes video editing processing to edit the videos that are captured by the in-vehicle camera 11a and the plural outside cameras 11b of the vehicle 1.

The databases include a user database 31a, an input information database 31b, a browsing information database 31c, and the like. The user can browse these databases by using the browser program in the mobile terminal 20.

In the user database 31a, user data of the user A is stored. The user data includes data that can be registered or updated by the user and data (a user identification number and the like) that is automatically allocated by the management device 30 at the time of user registration. The user A can perform the user registration in the management device 30 by using the mobile terminal 20.

The user data includes the user identification number, the vehicle identification number, the mobile terminal identification number, and the like of the user A. The user identification number is an identification number used to identify each user. The vehicle identification number is an identification number used to identify the vehicle 1 owned the user A. The mobile terminal identification number is an identification number used to identify the mobile terminal 20 owned by the user A.

The input information database 31b is a database that stores the image data, the measurement data, the input data, and the like that are received from the vehicle 1 owned by the user A as well as map data, outside traffic information, and the like. In particular, the input information database 31b includes travel log data. The travel log data is log data of a drive took by the user A. Every time the user takes a drive (that is, every time the trip mode is turned on), the management device 30 generates the new travel log data. More specifically, in a period from turning-on of the trip mode of the vehicle 1 to turning-off thereof, various types of data are accumulated as the travel log data for such a drive. The travel log data includes a unique drive identification number, the vehicle identification number used to identify the vehicle 1, the positional information of the vehicle 1, the positional information of the mobile terminal 20, the IG on/off information, the passenger sightline information, the driving state information, the conversation volume, and the operation information of the like button. In addition, in association with such a drive identification number, the input information database 31b stores the image data of each of the in-vehicle camera 11a and the plural outside cameras 11b, the emotional information of the driver, and the emotional information of the passenger. The image data of each of the in-vehicle camera 11a and the plural outside cameras 11b is associated with a video identification number.

The browsing information database 31c is a database for storing data that is generated when the management device 30 processes the data in the input information database 31b. The browsing information database 31c mainly includes a content database. In this content database, information on each of the plural videos that are edited in the plural editing modes in the management device 30 is stored in association with an identification number of the respective editing mode (a video content identification number). These video content identification numbers are associated with the video identification numbers described above.

### [Video Editing Processing]

Next, a specific description will be made on the video editing processing that is executed by the management device 30 in the embodiment of the present invention.

In this embodiment, when the trip mode is on, that is, when the vehicle 1 moves along the travel route, the management device 30 edits the plural videos that are captured by the in-vehicle camera 11a and the plural outside cameras 11b of the vehicle 1, and causes the mobile terminal 20 to show the edited video. More specifically, when the trip mode is on, as described above, based on the driving state information and the emotional state-related information (the passenger sightline information, the emotional information of the driver and the passenger, the conversation volume, and the operation information of the like button) that are sent from the controller 10 in the vehicle 1, the management device 30 determines: a first degree of action indicative of an influence of an element other than an interaction with a person on an experience of each of the driver and the passenger during movement on the travel route (corresponding to action from a "product" (an α cycle)); and a second degree of action indicative of an influence of the interaction with the person on the experience of each of the driver and the passenger during the movement on the travel route (corresponding to action from a "person" (a β cycle)), and edits the videos on the basis of these first and second degrees of action.

In particular, the management device 30 identifies, as plural highlight portions, a portion in which the first degree of action is relatively high and a portion in which the second degree of action is relatively high in the original videos, generates a highlight video (in other words, an overview video) by connecting all of these plural highlight portions or one or more of the highlight portions, and also generates a chapter-added video in which a chapter is added to a position corresponding to beginning of each of the plural highlight portions in each of the original videos, so as to segment the video. The first degree of action and the second degree of action are defined on the basis of such information that is included in the driving state information and the emotional state-related information described above. For example, the first degree of action is defined by the driver's driving technique, outside scenery, and the like while the second degree of action is defined by the interaction with the passenger, the interaction with another driver, and the like. Each of the first degree of action and the second degree of action can be quantified on the basis of such information that is included in the driving state information and the emotional state-related information. That "the first degree of action is relatively high" and that "the second degree of action is relatively high" described above mean that a value indicative of the first degree of action is equal to or higher than a specified value and that a value indicative of the second degree of action is equal to or higher than a specified value.

In detail, when the driving state information indicates that the driver is in the sleek driving state, the management device 30 determines that the first degree of action is relatively high, and identifies, as the highlight portion, the video that is captured by the outside camera 11b (in particular, the camera that captures the video of the area in front of the vehicle 1) at this time. In addition, when the emotional state-related information indicates that the emotion of the driver or the passenger is activated by a stimulus from the outside of the vehicle 1 (for example, the scenery, outside noise, or the like), the management device 30 determines that the first degree of action is relatively high, and identifies, as the highlight portion, the video captured by the outside camera 11b (typically the camera that captures the video of the area in front of the vehicle 1) at this time. Meanwhile, when the emotional state-related information indicates that the emotion of the driver or the passenger is activated by in-vehicle communication (conversation), the management device 30 determines that the second degree of action is relatively high, and identifies, as the highlight portion, the video captured by the in-vehicle camera 11a at this time.

Moreover, the management device 30 includes the plural editing modes, extracts one or more highlight portions from the plural highlight portions according to the editing mode that is selected by the user from these plural editing modes via the mobile terminal 20, and generates the highlight video by connecting these extracted highlight portions. In this case, before causing the user to select the editing mode, the management device 30 first generates the highlight video by connecting all of the plural highlight portions, and provides this highlight video to the user by the mobile terminal 20 (hereinafter, the editing mode to generate such a highlight video will be referred to as a "first editing mode", and the highlight video generated in this first editing mode will be referred to as the "first editing mode video"). That is, the management device 30 first shows a full picture of the plural highlight portions to the user by the first editing mode video, and causes the user to select the editing mode (one of second to fourth editing modes, which will be described below) that is suited to extract the preferred highlight portion from the plural highlight portions.

Specific contents of the second to fourth editing modes are as follows. Hereinafter, the highlight videos that are generated in the second to fourth editing modes will be referred to as a "second editing mode video", a "third editing mode video", and a "fourth editing mode video", respectively. In addition, an "identification condition of the highlight portion", which will be used below, means a condition for identifying the highlight portion, which constitutes each of the second to fourth editing mode videos, from each of the original videos.
(1) Second Editing Mode
   - Content of the second editing mode video: a video that is captured in the sleek driving state
   - Magnitude of the first or second degree of action: the first degree of action is relatively high.
   - Identification condition of the highlight portion that constitutes the second editing mode video: the sleek driving state of the driver continues for two seconds or longer.
   - Camera to be applied: the outside camera 11b that captures the video of the area in front of the vehicle
(2) Third Editing Mode
   - Content of the third editing mode video: a video that is captured when the emotion of the driver or the passenger is activated by the outside scenery (that is, the video that captures the scenery the driver or the passenger likes)
   - Magnitude of the first or second degree of action: the first degree of action is relatively high.
   - Identification condition of the highlight portion that constitutes the third editing mode video: the driver operates the like button, or the passenger's emotion is activated and the passenger's sightline is oriented to the outside.
   - Camera to be applied: the outside camera 11b that captures the video in a direction corresponding to the passenger's sightline (the outside camera 11b that captures the video of the area in front of the vehicle when the passenger's sightline cannot be identified)
(3) Fourth Editing Mode
   - Content of the fourth editing mode video: a video that is captured when the emotion of the driver or the passenger is activated by the in-vehicle communication (that is, a video that is captured when the in-vehicle conversation is animated)
   - Magnitude of the first or second degree of action: the second degree of action is relatively high.
   - Identification condition of the highlight portion that constitutes the fourth editing mode video: the driver's emotion or the passenger's emotion is activated and the conversation volume is large.
   - Camera to be applied: the in-vehicle camera 11a

The management device 30 further has a fifth editing mode to generate the chapter-added video in which the chapter is added to the position corresponding to the beginning of each of the plural highlight portions in the original videos as described above. A video that is generated in this fifth editing mode (hereinafter referred to as a "fifth editing mode video") differs from the above first to fourth editing mode videos, and includes all of the plural videos that are captured by the in-vehicle camera 11a and the plural outside cameras 11b instead of the highlight video (the overview video) .

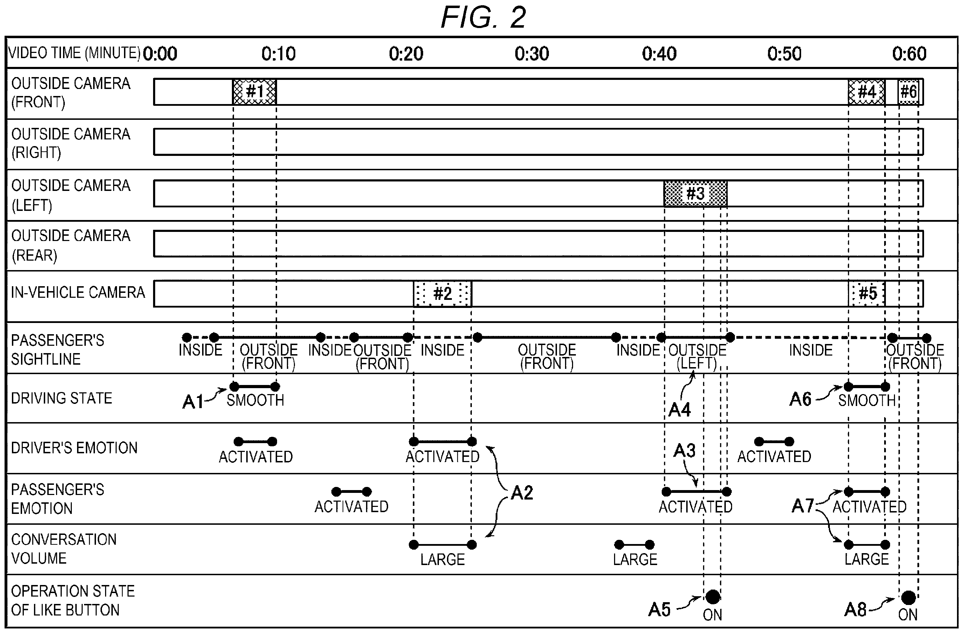

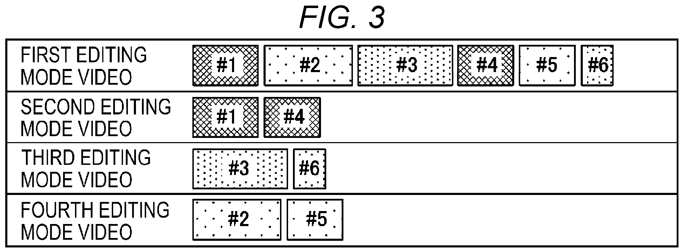

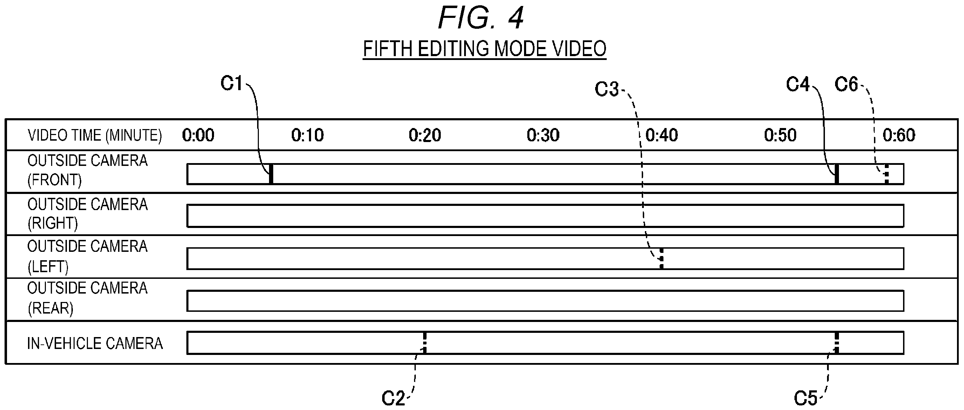

Next, a description will be made on a specific example of the video editing processing according to this embodiment with reference to Fig. 2 to Fig. 4. Fig. 2 is an explanatory chart of a method for identifying the highlight portions in the videos by the video editing processing according to this embodiment, Fig. 3 is a schematic configuration view illustrating an example of each of the first to fourth editing mode videos according to this embodiment, and Fig. 4 is a schematic configuration chart illustrating an example of the fifth editing mode video according to this embodiment.

An upper portion of Fig. 2 schematically illustrates the video captured by the outside camera 11b that captures the video of the area in front of the vehicle, the video captured by the outside camera 11b that captures the video of the area on the right side of the vehicle, the video captured by the outside camera 11b that captures the video of the area on the left side of the vehicle, the video captured by the outside camera 11b that captures the video of the area behind the vehicle, and the video that is captured by the in-vehicle camera 11a. In a portion below these videos, the passenger's sightline, the driving state, the driver's emotion, the passenger's emotion, the conversation volume, and the operation state of the like button are illustrated.

First, when the identification condition of the highlight portion for the second editing mode is satisfied, that is, when the sleek driving state of the driver continues for two seconds or longer (an arrow A1), the management device 30 identifies the video, which is captured by the outside camera 11b capturing the video of the area in front of the vehicle at this time, as a highlight portion #1 for constituting the second editing mode video. In this case, the management device 30 identifies, as the highlight portion #1, the video that is captured from five seconds before timing at which the identification condition that the sleek driving state continues for two seconds or longer starts being satisfied to five seconds after timing at which the identification condition is no longer satisfied. That is, the management device 30 identifies, as the highlight portion, a video in a period added with five seconds before and after a period in which the identification condition of the highlight portion is satisfied (the same applies below). By the way, when the like button is on, a video in a period of five seconds before and after timing at which the like button is on (that is, a video of ten seconds in total) may be identified as the highlight portion.

Next, when the identification condition of the highlight portion for the fourth editing mode is satisfied, that is, when the driver's emotion is activated and the conversation volume becomes "large" (an arrow A2), the management device 30 identifies the video captured by the in-vehicle camera 11a at this time as a highlight portion #2 for constituting the fourth editing mode video.

Next, when the identification condition of the highlight portion for the third editing mode is satisfied, that is, when the passenger's emotion is activated and the passenger's sightline is oriented to the outside (arrows A3, A4), the management device 30 identifies the video, which is captured by the outside camera 11b capturing the video of the area on the left side of the vehicle corresponding to the passenger's sightline at this time, as a highlight portion #3 for constituting the third editing mode video. In such a period that the identification condition of the highlight portion for the third editing mode is satisfied, the other identification condition of the third editing mode is satisfied, that is, the like button is on (an arrow A5). That is, the periods in each of which the identification condition is satisfied overlap each other. Also, in the case where such an identification condition is satisfied that the like button is on, the video captured by the outside camera 11b that captures the video of the area on the left side of the vehicle corresponding to the passenger's sightline is identified as the highlight portion. Accordingly, in the case where the periods, in each of which the identification condition is satisfied, overlap each other and the camera to be applied for the highlight portion is the same at the time when each of the identification conditions is satisfied, the management device 30 collectively applies the single highlight portion.

Next, when the identification condition of the highlight portion for the second editing mode is satisfied, that is, when the sleek driving state of the driver continues for two seconds or longer (an arrow A6), the management device 30 identifies the video, which is captured by the outside camera 11b capturing the video of the area in front of the vehicle at this time, as a highlight portion #4 for constituting the second editing mode video. In such a period that the identification condition of the highlight portion for the second editing mode is satisfied, the identification condition of the highlight portion for the fourth editing mode is satisfied, that is, the passenger's emotion is activated and the conversation volume becomes "large" (an arrow A7). That is, the periods in each of which the identification condition is satisfied overlap each other. In the case where the identification condition of the highlight portion for the fourth editing mode is satisfied, that is, when the passenger's emotion is activated and the conversation volume becomes "large", instead of the video that is captured by the outside camera 11b, the video that is captured by the in-vehicle camera 11a is identified as the highlight portion. Accordingly, when the passenger's emotion is activated and the conversation volume becomes "large" (the arrow A7), the management device 30 identifies the video captured by the in-vehicle camera 11a at this time as a highlight portion #5 instead of the above highlight portion #4. Just as described, in the case where the camera to be applied for the highlight portion differs at the time when each of the identification conditions is satisfied, the management device 30 applies the videos captured by the different cameras as the highlight portions even when the periods, in each of which the identification condition is satisfied, overlap each other.

Next, when the identification condition of the highlight portion for the third editing mode is satisfied, that is, when the like button is on (an arrow A8), the management device 30 identifies the video, which is captured by the outside camera 11b capturing the video of the area in front of the vehicle at this time, as a highlight portion #6 for constituting the third editing mode video.

Next, Fig. 3 schematically illustrates a configuration of each of the first to fourth editing mode videos in the case where the highlight portions are identified by the video editing processing in Fig. 2. As illustrated in Fig. 3, the first editing mode video includes all of the plural highlight portions #1 to #6. The second editing mode video includes the highlight portions #1, #4, which are captured by the outside camera 11b at the time when the driver is in the sleek driving state, of the highlight portions #1 to #6. The third editing mode video includes the highlight portions #3, #6, which are captured by the outside camera 11b at the time when the emotion of the driver or the passenger is activated by the outside scenery, of the highlight portions #1 to #6. The fourth editing mode video includes the highlight portions #2, #5, which are captured by the in-vehicle camera 11a at the time when the emotion of the driver or the passenger is activated by the in-vehicle communication (that is, the in-vehicle conversation is animated), of the highlight portions #1 to #6.

In regard to each of the first to fourth editing mode videos, the management device 30 generates the video by aligning and connecting the plural highlight portions in a descending order of the start time. Here, in the first editing mode video, the period of the highlight portion #4 overlaps the period of the highlight portion #5 (see Fig. 2), that is, the start times of the highlight portions #4, #5 are the same. However, in this case, the management device 30 generates the video by sequentially aligning the highlight portion #4 and the highlight portion #5. For example, the management device 30 aligns the highlight portions with the same start time in an order of the area in front of the vehicle, the area on the right side of the vehicle, the area on the left side of the vehicle, the area behind the vehicle, and the inside of the vehicle. In regard to the highlight portions #4, #5, the management device 30 generates the video in which the highlight portion #4 is placed prior to the highlight portion #5.

Next, Fig. 4 schematically illustrates a configuration of the fifth editing mode video in the case where the highlight portions are identified by the video editing processing in Fig. 2. As illustrated in Fig. 4, the fifth editing mode video is a video in which chapters C1 to C6 are added to positions corresponding to beginning of the plural highlight portions #1 to #6 in the videos (five videos) captured by the plural outside cameras 11b and the in-vehicle camera 11a, so as to segment the videos.

As described above, the management device 30 first causes the mobile terminal 20 to show the first editing mode video, causes the user to select any of the second to fifth editing modes, thereafter generates any of the second to fifth editing mode videos according to the editing mode selected by the user, and causes the mobile terminal 20 to show the generated video. Here, the user can select the first editing mode. In such a case, the mobile terminal 20 only needs to show the first editing mode video that has already been generated.

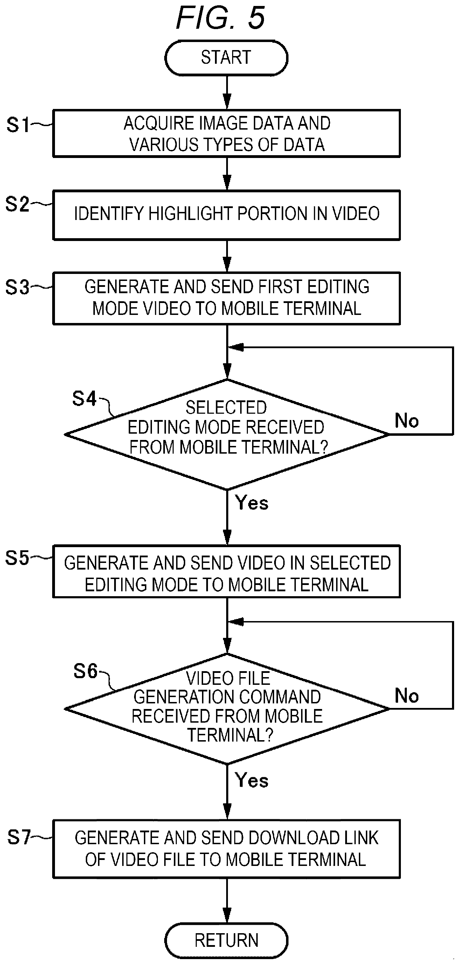

Next, a description will be made on an overall flow of the video editing processing according to this embodiment with reference to Fig. 5. Fig. 5 illustrates a processing flow of the video editing processing that is executed by the management device 30 in this embodiment. The management device 30 executes the video editing processing by using data that is acquired from the vehicle 1 when the trip mode is on (this data is sent from the vehicle 1 and stored in the input information database 31b of the management device 30). In addition, after the trip mode is off (more specifically, after the vehicle 1 arrives at the end point of the travel route and the IG signal is turned off), the management device 30 starts the video editing processing.

First, the management device 30 reads the image data of the imaging device 11, the measurement data of the sensor device 12, and the input data of the input device 15, which are sent from the vehicle 1, from the input information database 31b (S1). In this case, the management device 30 reads, from the input information database 31b, the data that is stored in connection with the drive identification number corresponding to a trip, the video editing processing of which should be executed. More specifically, the management device 30 acquires the video captured by each of the in-vehicle camera 11a and the plural outside cameras 11b, the passenger sightline information, the driving state information indicative of whether the driver is in the sleek driving state, the emotional information of the driver, the emotional information of the passenger, the conversation volume of the occupants, and the operation information of the like button.

Next, the management device 30 identifies the highlight portions in the videos that are captured by the in-vehicle camera 11a and the plural outside cameras 11b of the vehicle 1 (S2). In this case, the management device 30 applies the specified identification conditions for identifying the highlight portions that constitute the second to fourth editing mode videos from the videos captured by the plural cameras 11a, 11b. More specifically, the management device 30 (1) uses the condition that the sleek driving state of the driver continues for two seconds or longer as the identification condition of the highlight portion that constitutes the second editing mode video, (2) uses the condition that the driver operates the like button or the condition that the passenger's emotion is activated and the passenger's sightline is oriented to the outside as the identification condition of the highlight portion that constitutes the third editing mode video, and (3) uses the condition that the driver's emotion or the passenger's emotion is activated and the conversation volume is large as the identification condition of the highlight portion that constitutes the fourth editing mode video.

That is, in the case where it is determined on the basis of the driving state information that such an identification condition that the sleek driving state continues for two seconds or longer is satisfied, the management device 30 identifies the video, which is captured by the outside camera 11b capturing the video of the area in front of the vehicle at the time when this identification condition is satisfied, as the highlight portion constituting the second editing mode video. In addition, in the case where it is determined on the basis of the operation information of the like button, the passenger sightline information, and the emotional information of the passenger that such an identification condition that the driver operates the like button is satisfied or such an identification condition that the passenger's emotion is activated and the passenger's sightline is oriented to the outside is satisfied, the management device 30 identifies the video, which is captured by the outside camera 11b capturing the video in the direction corresponding to the passenger's sightline (the outside camera 11b capturing the video of the area in front of the vehicle in the case where the passenger's sightline cannot be identified) at the time when this identification condition is satisfied, as the highlight portion constituting the third editing mode video. Furthermore, in the case where it is determined on the basis of the emotional information of the driver, the emotional information of the passenger, and the conversation volume that such an identification condition that the driver's emotion or the passenger's emotion is activated and the conversation volume is large is satisfied, the management device 30 identifies the video, which is captured by the in-vehicle camera 11a at the time when this identification condition is satisfied, as the highlight portion constituting the fourth editing mode video.

In the case where the management device 30 identifies the plural highlight portions, just as described, for each of the plural highlight portions, the management device 30 stores: information used to identify the video by the camera that captures the highlight portion (one of the in-vehicle camera 11a and the plural outside cameras 11b); and information on start time of the highlight portion and end time of the highlight portion in this video.

Next, the management device 30 generates the first editing mode video (the highlight video) by aligning and connecting all the highlight portions that constitute the second to fourth editing mode videos identified as described above in the descending order of the start time, and sends data on this first editing mode video to the mobile terminal 20 (S3). The management device 30 stores the thus-generated first editing mode video in the content database of the browsing information database 31c. Thereafter, the mobile terminal 20 shows the first editing mode video that has been sent from the management device 30, and causes the user to select the editing mode for editing the video (for example, shows a screen for selecting the editing mode).

Next, the management device 30 determines whether the editing mode selected by the user has been received from the mobile terminal 20 (S4). If the management device 30 has received the editing mode selected by the user (S4: Yes), the management device 30 generates the video that corresponds to this editing mode, and sends data on this video to the mobile terminal 20 (S5). More specifically, in the case where any of the second to fourth editing modes is selected, the management device 30 extracts the highlight portions corresponding to the selected editing mode from the plural highlight portions that constitute the second to fourth editing mode videos identified as described above, aligns and connects these extracted highlight portions in the descending order of the start time, and thereby generates the highlight video (any of the second to fourth editing mode videos). Meanwhile, in the case where the fifth editing mode is selected, the management device 30 generates the fifth editing mode video (the chapter-added video) in which the chapter is added to the position corresponding to the beginning (defined by the start time of each of the highlight portions in the videos) of each of the plural highlight portions, which constitute the second to fourth editing mode videos identified as described above, in the videos captured by the in-vehicle camera 11a and the plural outside cameras 11b, so as to segment the videos. The management device 30 stores any of the thus-generated second to fifth editing mode videos in the content database of the browsing information database 31c.

Next, the management device 30 determines whether a video file generation command for downloading the video that corresponds to the editing mode selected by the user has been received from the mobile terminal 20 (S6). This video file generation command is issued when the user presses a download button shown on the mobile terminal 20. If receiving the video file generation command from the mobile terminal 20 (S6: Yes), the management device 30 generates a video file of the video that corresponds to the editing mode selected by the user, generates a download link of this video file, and sends this download link to the mobile terminal 20 (S7). The video file is stored in a download link destination in the content database. The mobile terminal 20 shows the download link that is sent from the management device 30.

### [Operation and Effects]

Next, a description will be made on operation and effects of the video editing equipment according to this embodiment.

In this embodiment, the management device 30 as the video editing equipment acquires the driving state information by the driver and the emotional state-related information related to the emotional state of the driver and/or the passenger during the movement of the vehicle 1, determines the first degree of action and the second degree of action on the basis of these driving state information and emotional state-related information, identifies the plural highlight portions in the videos, which are captured by the in-vehicle camera 11a and the outside cameras 11b during the movement of the vehicle 1, on the basis of the determined first and second degrees of action, and edits the videos on the basis of these plural highlight portions. In this way, it is possible to edit the videos that are captured in the vehicle 1 on the basis of: the first degree of action indicative of the influence of the element other than the interaction with the person on the experience of the driver or the passenger during the movement by the vehicle 1 (corresponding to the action from the "product" (the α cycle)); and the second degree of action indicative of the influence of the interaction with the person on the experience of the driver or the passenger during the movement by the vehicle 1 (corresponding to the action from the "person" (the β cycle)). According to the thus-edited video, the user (the driver or the passenger) can look back both of the action from the "product" and the action from the "person", which are inherent to the drive experience. Therefore, according to this embodiment, it is possible to promote breadth of the experiences through the vehicle 1.

In addition, according to this embodiment, the management device 30 identifies, as the plural highlight portions, the portion in which the first degree of action is relatively high and the portion in which the second degree of action is relatively high in the videos, and generates the highlight video that includes all of the plural highlight portions or one or more of the highlight portions. In this way, it is possible to appropriately generate the highlight video that summarizes the original videos from the perspectives of the first degree of action and the second degree of action. According to such a highlight video, it is possible to efficiently watch the portion in which the first degree of action is relatively high and the portion in which the second degree of action is relatively high in the original videos.

According to this embodiment, the management device 30 adds the chapter to the position corresponding to the beginning of each of the plural highlight portions in the videos, so as to segment the videos. In this way, it is possible to efficiently watch the plural highlight portions in the video by selecting any of the chapters added to the original videos.

According to this embodiment, when the driver is in the preferred driving state, the management device 30 determines that the first degree of action is relatively high, and identifies, as the highlight portion, the video that is captured by the outside camera 11b at this time. In this way, it is possible to appropriately identify, as the highlight portion, the portion in which the first degree of action is relatively high in the video on the basis of the driving state of the driver.

According to this embodiment, when the emotion of the driver or the passenger is activated by the outside stimulus (for example, the scenery), the management device 30 determines that the first degree of action is relatively high, and identifies, as the highlight portion, the video that is captured by the outside camera 11b at this time. In this way, it is possible to appropriately identify, as the highlight portion, the portion in which the first degree of action is relatively high in the video on the basis of the emotion of the driver or the passenger activated by the stimulus from the outside.

According to this embodiment, when the emotion of the driver or the passenger is activated by the in-vehicle communication, the management device 30 determines that the second degree of action is relatively high, and identifies, as the highlight portion, the video that is captured by the in-vehicle camera 11a at this time. In this way, it is possible to appropriately identify, as the highlight portion, the portion in which the second degree of action is relatively high in the video on the basis of the emotion of the driver or the passenger activated by the in-vehicle communication.

According to this embodiment, the management device 30 includes the plural editing modes, extracts one or more highlight portions from the plural highlight portions according to the editing mode that is selected by the user from these plural editing modes, and generates the highlight video that includes these extracted highlight portions. In this way, it is possible to generate the highlight video that is edited according to the user's taste.

According to this embodiment, before causing the user to select the editing mode, the management device 30 generates the highlight video that includes all of the plural highlight portions, and provides this highlight video to the user. In this way, it is possible for the user to appropriately select the editing mode that corresponds to the user's taste.

According to this embodiment, the management device 30 has the second editing mode to extract the highlight portion that corresponds to the video captured by the outside camera 11b from the plural highlight portions, so as to generate the highlight video when the driver is in the preferred driving state. In this way, it is possible to appropriately generate the highlight video, which includes the video of the outside captured when the driver is in the preferred driving state, by editing.

According to this embodiment, the management device 30 has the third editing mode to extract the highlight portion that corresponds to the video captured by the outside camera 11b from the plural highlight portions, so as to generate the highlight video when the emotion of the driver or the passenger is activated by the outside stimulus. In this way, it is possible to appropriately generate the highlight video, which includes the video of the outside captured when the emotion of the driver or the passenger is activated by the outside stimulus, by editing.

According to this embodiment, the management device 30 has the fourth editing mode to extract the highlight portion that corresponds to the video captured by the in-vehicle camera 11a from the plural highlight portions, so as to generate the highlight video when the emotion of the driver or the passenger is activated by the communication in the cabin. In this way, it is possible to appropriately generate the highlight video, which includes the video of the inside captured when the emotion of the driver or the passenger is activated by the in-vehicle communication in the cabin, by editing.

### [Modified Example]

In this embodiment described above, the embodiment in which the moving body is a vehicle such as a car has been described. However, the moving body is not limited to the vehicle being a car and includes a bus, a motorcycle, a scooter, a watercraft, and an aircraft.

### [Description of Reference Signs and Numerals]

- 1: vehicle (moving body)
- 3: management center
- 10: controller
- 11: imaging device
- 11a: in-vehicle camera
- 11b: outside camera
- 12: sensor device
- 20: mobile terminal
- 30: management device (video editing equipment)
- A: user
- S: video editing system

## Claims

1. Video editing equipment (30) configured to:
acquire videos captured by plural cameras (11a, 11b), each of which captures a video of outside or inside of a moving body (1) during movement of the moving body (1);
acquire driving state information indicative of a driving state of the moving body (1) by a driver (A) and emotional state-related information related to an emotional state of the driver (A) and/or a passenger of the moving body (1) during the movement of the moving body (1);
determine a first degree of action indicative of an influence of an element other than an interaction with a person on an experience of the driver (A) and/or the passenger and a second degree of action indicative of an influence of the interaction with the person on the experience of the driver (A) and/or the passenger on the basis of the acquired driving state information and the acquired emotional state-related information;
identify plural highlight portions (#1 to #6) in the videos on the basis of the determined first degree of action and the determined second degree of action; and
edit the videos on the basis of the plural identified highlight portions (#1 to #6).

2. The video editing equipment (30) according to claim 1 configured to:
identify, as the plural highlight portions (#1 to #6), a portion in which the first degree of action is relatively high and a portion in which the second degree of action is relatively high in the videos, and generate a highlight video that includes all of the plural highlight portions (#1 to #6) or one or more of the highlight portions (#1 to #6) as editing of the videos.

3. The video editing equipment (30) according to claim 1 or 2 configured to:
as editing of the video, add a chapter to a position corresponding to beginning of each of the plural highlight portions (#1 to #6) in the videos, so as to segment the videos.

4. The video editing equipment (30) according to any one of claims 1 to 3 configured to:
when the driving state information indicates that the driver (A) is in a preferred driving state, determine that the first degree of action is relatively high, and identify, as the highlight portion, the video that is captured by the camera (11b) capturing a video of the outside of the moving body (1) at this time.

5. The video editing equipment (30) according to any one of claims 1 to 4 configured to:
when the emotional state-related information indicates that the emotion of the driver (A) and/or the passenger is activated by a stimulus from the outside of the moving body (1), determine that the first degree of action is relatively high, and identify, as the highlight portion, the video that is captured by the camera (11b) capturing the video of the outside of the moving body (1) at this time.

6. The video editing equipment (30) according to any one of claims 1 to 5 configured to:
when the emotional state-related information indicates that the emotion of the driver (A) and/or the passenger is activated by in-vehicle communication in the moving body (1), determine that the second degree of action is relatively high, and identify, as the highlight portion, the video that is captured by the camera (11a) capturing the video of the inside of the moving body (1) at this time.

7. The video editing equipment (30) according to any one of claims 1 to 6 configured to:
include plural editing modes, extract one or more highlight portions from the plural highlight portions (#1 to #6) according to the editing mode that is selected by a user from these plural editing modes, and generate a highlight video that includes these extracted highlight portions.

8. The video editing equipment (30) according to claim 7 configured to:
before causing the user to select the editing mode, generate a highlight video that includes all of the plural highlight portions (#1 to #6), so as to provide the user with the highlight video that includes all of the plural highlight portions (#1 to #6).

9. The video editing equipment (30) according to claim 7 or 8 comprising:
an editing mode to extract a highlight portion that corresponds to the video captured by the camera (11b) capturing the video of the outside of the moving body (1) from the plural highlight portions (#1 to #6), so as to generate the highlight video when the driver (A) is in the preferred driving state.

10. The video editing equipment (30) according to any one of claims 7 to 9 comprising:
an editing mode to extract the highlight portion that corresponds to the video captured by the camera (11b) capturing the video of the outside of the moving body (1) from the plural highlight portions (#1 to #6), so as to generate the highlight video when the emotion of the driver (A) and/or the passenger is activated by the stimulus from the outside of the moving body (1).

11. The video editing equipment (30) according to any one of claims 7 to 10 comprising:
an editing mode to extract the highlight portion that corresponds to the video captured by the camera (11a) capturing the video of the inside of the moving body (1) from the plural highlight portions (#1 to #6), so as to generate the highlight video when the emotion of the driver (A) and/or the passenger is activated by the in-vehicle communication in the moving body (1).

12. The video editing equipment (30) according to any one of the preceding claims configured to:
when a preferred driving state of the driver (A) continues for two seconds or longer, identify a video, which is captured by an outside camera (11b), preferably capturing a video of the area in front of the moving body (1) at this time, as an highlight portion.

13. The video editing equipment (30) according to any one of the preceding claims configured to:
generate a video by aligning and connecting plural highlight portions in a descending order of a start time; and/or
in the case start times of highlight portions are the same, generate a video by sequentially aligning the highlight portions, in particular align highlight portions with the same start time in an order of an area in front of the moving body (1), an area on the right side of the moving body (1), an area on the left side of the moving body (1), an area behind the moving body (1), and an inside of the moving body (1) .

14. The video editing equipment (30) according to any one of the preceding claims configured to:
identify, as a highlight portion, a video in a period added with five seconds before and after a period in which an identification condition of the highlight portion is satisfied; and/or in the case where periods, in each of which an identification condition is satisfied, overlap each other and a camera (11a, 11b) to be applied for the highlight portion is the same at the time when each of the identification conditions is satisfied, collectively apply a single highlight portion.

15. A video editing system (S) including:
a video editing equipment (30) according to any preceding claim; and
a moving body (1);
wherein preferably the moving body (1) is a vehicle (1), in particular a car, a bus, a motorcycle, a scooter, a watercraft, or an aircraft.
